# EUROPEAN PATENT SPECIFICATION

(11) **EP 2 924 239 B1**
(45) Date of publication and mention of the grant of the patent: **21.11.2018**
(21) Application number: 15158468.7
(22) Date of filing: 29.11.2011
(51) Int. Cl.: F01D 5/18

(54) **Turbine blade and gas turbine**
Turbinenschaufel und Gasturbine
Aube de turbine et turbine á gaz

(30) Priority: 11.03.2011 JP 2011053779
(43) Date of publication of application: 30.09.2015
(62) Divisional of application: 11860897.5
(73) Proprietor: Mitsubishi Hitachi Power Systems, Ltd., Yokohama 220-8401 (JP)
(72) Inventor: Hada, Satoshi, Tokyo, 108-8215 (JP)
(74) Representative: Henkel, Breuer & Partner

(56) References cited:
- EP-A1- 2 037 081
- EP-A2- 0 866 214
- EP-A2- 1 688 587
- WO-A1-94/12770
- US-B1- 7 704 046

## Description

### {Technical Field}

The present invention relates to a turbine blade applied to a gas turbine and to a gas turbine.

### {Background Art}

A gas turbine is an apparatus that converts thermal energy of high-temperature combustion gas into rotational energy and takes out the converted energy as electric power, and turbine blades incorporated in the gas turbine are always used in the high-temperature combustion gas. Accordingly, the turbine blades each include a cooling flow channel such as a serpentine flow channel, and take in cooling air from the outside to thereby cool a blade body thereof. In particular, a fillet portion forming a joint surface between the blade body and the platform of each turbine blade has a thick wall and thus is difficult to cool. Hence, the wall temperature of the fillet portion is relatively high, and the fillet portion tends to be subjected a thermal stress, in terms of a thermal load and a blade structure. In order to solve this problem, various methods of cooling the fillet portion by convection with cooling air have been proposed as means for cooling the fillet portion of the turbine blade.

JP 2006-112429A discloses the following solution. Cooling air is introduced into a cavity provided in a blade body near a fillet portion, through a cooling flow channel from a base portion (blade root) side, the fillet portion is cooled by convection from the inside thereof, and the cooling air is discharged into combustion gas from a film cooling hole provided in the cavity.

JP 2006-170198A discloses the following solution. A branch pipe for cooling air is drawn from a cooling air supply channel provided in a base portion, a film cooling hole is opened so as to pass through a fillet portion, and the cooling air is blown out from the film cooling hole, to thereby cool the fillet portion.

WO 94/12770A1 and EP 2037081A1 disclose turbine blades with a platform and a blade body that are integrally formed with a fillet portion at the joint surface between the blade body and the platform. The blade body is provided with plural cooling flow channels formed inside the blade body profile. The base portion of the turbine blade includes a supply flow channel for supplying the cooling medium to the cooling flow channels in the blade body. The turbine blades disclosed in these documents also have a bypass flow channel that is branched off from a high-pressure part of the cooling flow channels, passes in the vicinity of the fillet portion substantially perpendicular thereto in the wall of the blade body and opens to the outside of the turbine blade, either in the base portion or at the platform surface.
EP 0866214 A2 discloses a turbine blade where bypass flow channels are provided to cool the platform of the gas turbine rotor blade, not the fillet portion, and where the cooling medium which is steam after being extracted from a high-pressure portion of a cooling passage is returned to a low-pressure portion of the cooling flow channel of the same system.

### {Summary of Invention}

### {Technical Problem}

Unfortunately, a high thermal stress is generally applied near the fillet portion and to the outer surface of the platform on which a large thermal load is put. Hence, there is a possibility that the fatigue crack easily occurs due to stress concentration around a hole, resulting in the problem in a cooling hole.

The present invention has been made in view of the above-mentioned problem, and therefore has an object to provide a cooling structure for a turbine blade, the cooling structure being capable of eliminating the need to form a hole on a blade surface and a platform outer surface to which a high thermal stress is applied, and effectively utilizing cooling air that has cooled a fillet portion by convection, as cooling air for the inside of a blade body without discharging the cooling air into combustion gas from a cooling hole near the fillet portion.

### {Solution to Problem}

In order to solve the above-mentioned problem, the invention provides a turbine blade as defined by claim 1 and a gas turbine which includes the above-mentioned turbine blade..

A turbine blade according to the present invention includes: a platform; a blade body including a cooling flow channel including a meandering serpentine cooling flow channel; a fillet portion provided in a joint surface between the blade body and the platform; and a base portion including a cooling flow channel communicated with the serpentine cooling flow channel. The cooling flow channel includes a bypass flow channel that is branched off from a high-pressure part of the cooling flow channel, is provided inside of the fillet portion so as to run along the fillet portion, and is connected to a low-pressure part of the cooling flow channel.

According to the turbine blade of the invention, the bypass flow channel is branched off from the high-pressure part of the cooling flow channel, in which the cooling air pressure is high, is provided inside of the fillet portion so as to run along the fillet portion, and is connected to the low-pressure part of the cooling flow channel, in which the cooling air pressure is low. Hence, part of the cooling air can be caused to flow into the bypass flow channel by utilizing a difference in pressure of the cooling air between the high-pressure part and the low-pressure part. With this configuration, the fillet portion can be cooled from the inside thereof by convection with the cooling air flowing through the bypass flow channel, and hence it is not necessary to provide a cooling hole near the fillet portion or in the platform surface. Accordingly, a possibility that the fatigue crack and other such problems of the blade due to stress concentration around the cooling hole can be avoided, leading to enhanced reliability of the blade. In addition, the cooling air flowing through the bypass flow channel is returned to the low-pressure part of the cooling flow channel, and cools by convection the inside of the blade body while flowing through the cooling flow channel and being discharged into combustion gas. Hence, the cooling air can be used for several occasions, leading to a reduction in the amount of cooling air.

It is desirable that the cooling flow channel of the turbine blade according to the invention includes the bypass flow channel having: an entrance provided in a portion of the fillet portion of the high-pressure part; and an exit provided in the fillet portion of the low-pressure part.

It is desirable that the bypass flow channel of the turbine blade according to the invention has: an entrance provided on an inner side in a radial direction from the fillet portion of the high-pressure part; and an exit provided on an outer side in the radial direction from the fillet portion of the low-pressure part.

It is desirable that the bypass flow channel of the turbine blade according to the invention has: an entrance provided on an outer side in a radial direction from the fillet portion corresponding to the high-pressure part; and an exit provided on an inner side in the radial direction from the fillet portion of the low-pressure part.

It is desirable that the cooling flow channel of the turbine blade according to the invention includes cooling flow channels in a plurality of flow systems and that the high-pressure part and the low-pressure part be provided in cooling flow channels in different flow systems.

It is desirable that the cooling flow channels of the turbine blade according to the invention includes cooling flow channels in a plurality of flow systems and that the high-pressure part and the low-pressure part be provided in a cooling flow channel in the same flow system.

It is desirable that the bypass flow channel of the turbine blade according to the invention be provided in at least one of a pressure side and a negative pressure side of the blade body.

It is desirable that: the cooling flow channel of the blade body of the turbine blade according to the invention include cooling flow channels in three flow systems; the first-system cooling flow channel be formed of a first cooling flow channel located closest to a leading edge; the second-system cooling flow channel be formed of a serpentine cooling flow channel including a second cooling flow channel, a third cooling flow channel, and a fourth cooling flow channel that are arranged in the stated order from the leading edge toward a trailing edge, the second cooling flow channel being located close to the first cooling flow channel; the third-system cooling flow channel be formed of a serpentine cooling flow channel including a fifth cooling flow channel, a sixth cooling flow channel, and a seventh cooling flow channel that are arranged in the stated order from the leading edge toward the trailing edge, the fifth cooling flow channel being located close to the fourth cooling flow channel; the high-pressure part be provided in the first cooling flow channel; and the low-pressure part be provided in the second cooling flow channel.

A gas turbine according to the present invention includes the above-mentioned turbine blade.

### {Advantageous Effects of Invention}

According to the present invention, the turbine blade includes the bypass flow channel that is branched off from the high-pressure part of the cooling flow channel, is provided inside of the fillet portion so as to run along the fillet portion, and is returned to the low-pressure part of the cooling flow channel, and hence the fillet portion can be cooled by convection from the inside thereof. Accordingly, the fillet portion can be cooled without forming a cooling hole on the outer surface near the fillet portion or the outer surface of the platform to which a high thermal stress is applied, and hence fatigue crack and other such problems of the blade can be avoided, leading to enhanced reliability of the blade.

### {Brief Description of Drawings}

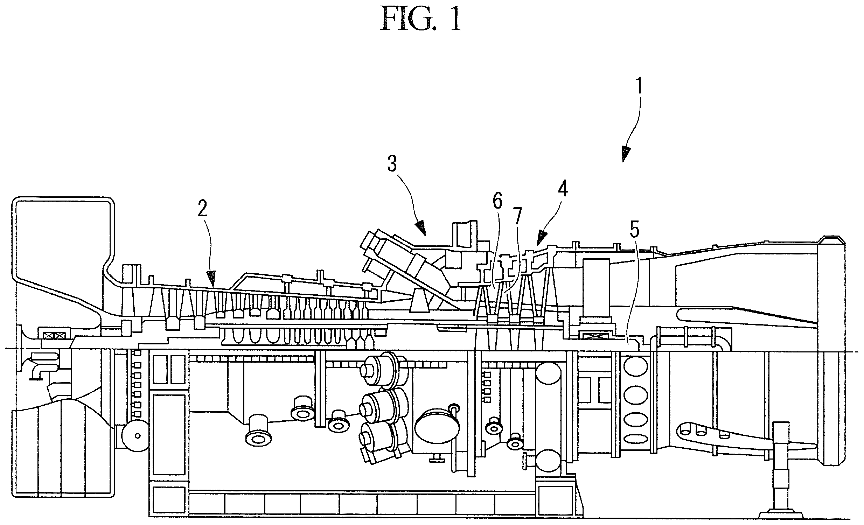

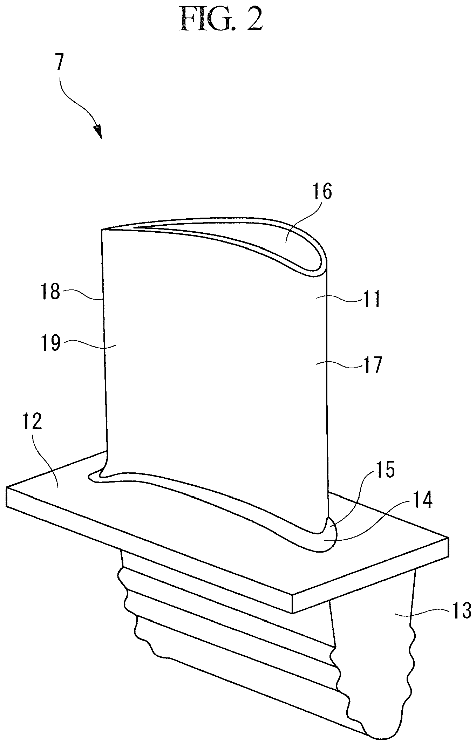

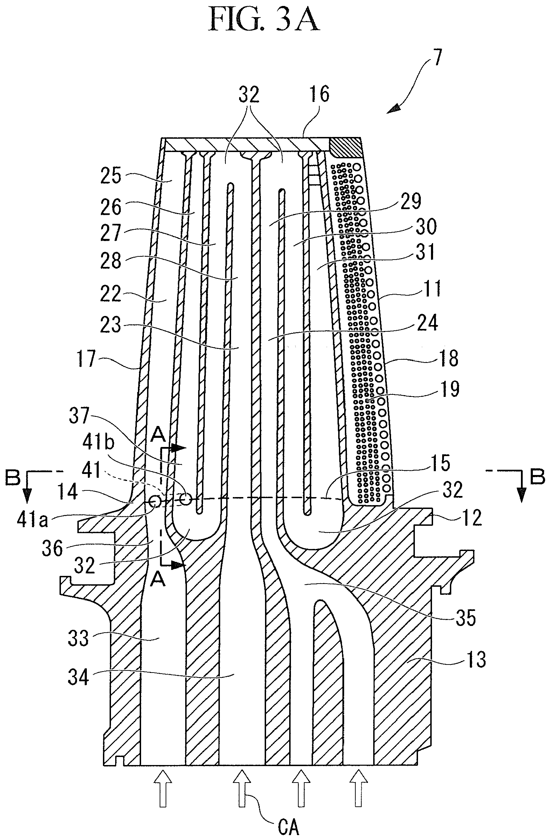

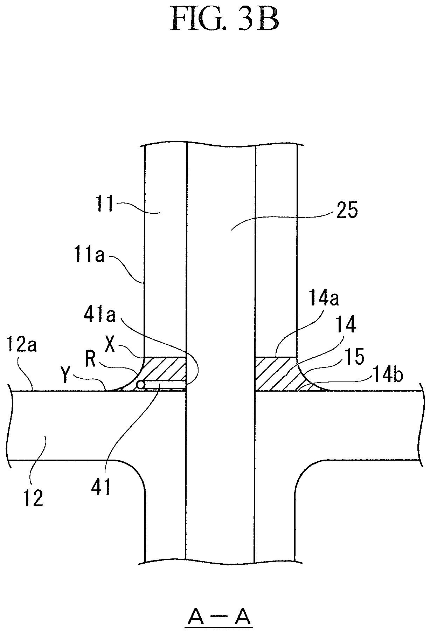

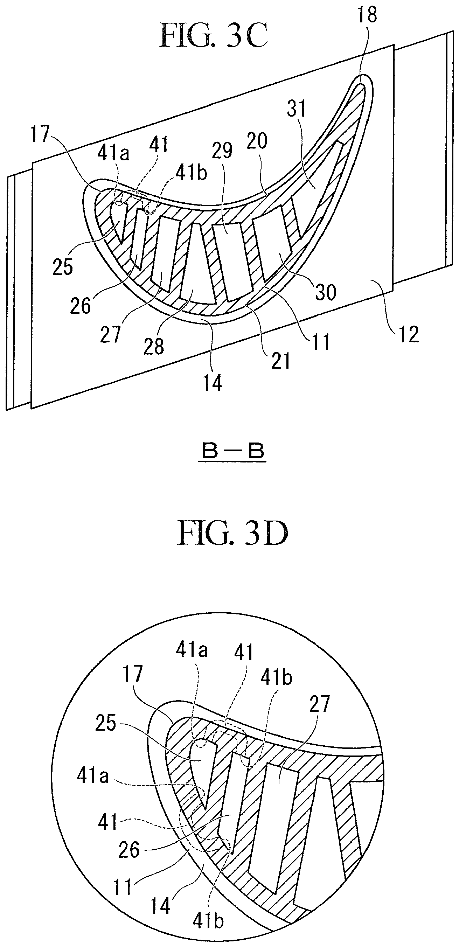

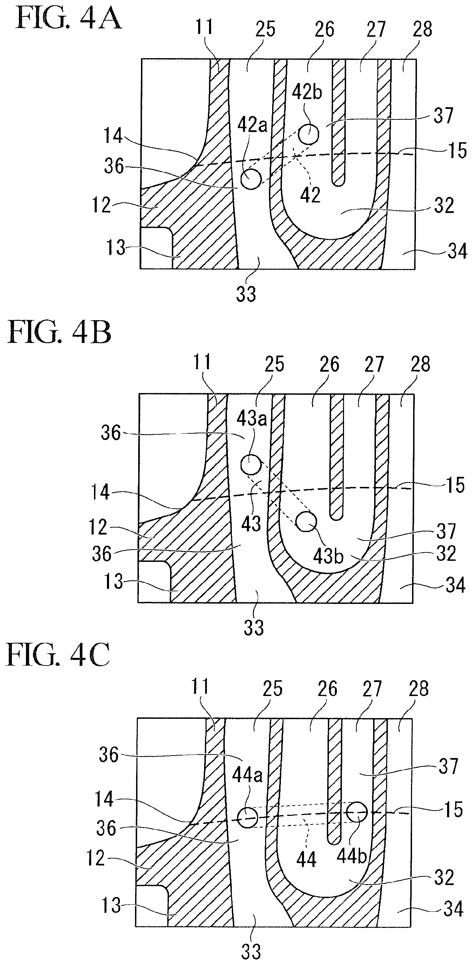

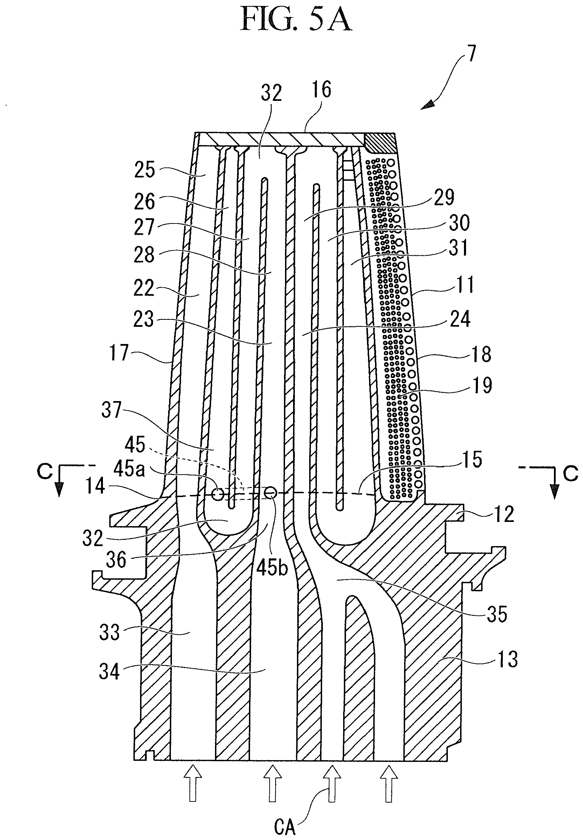

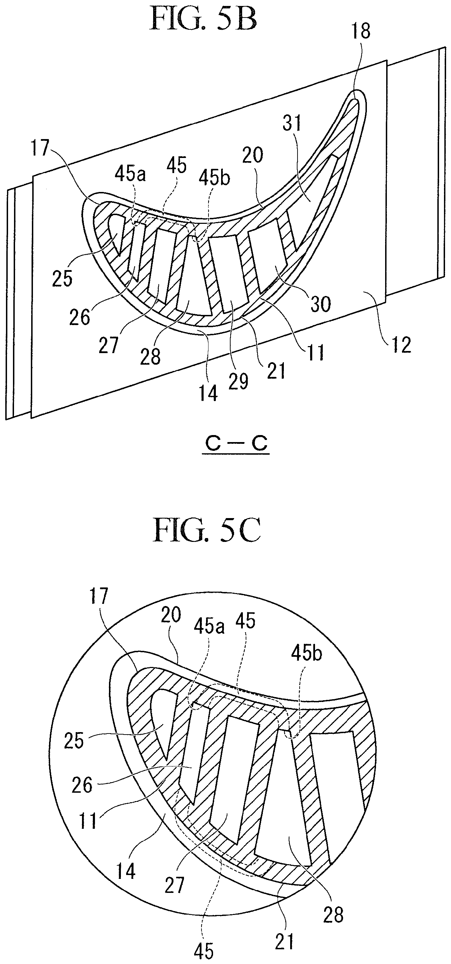

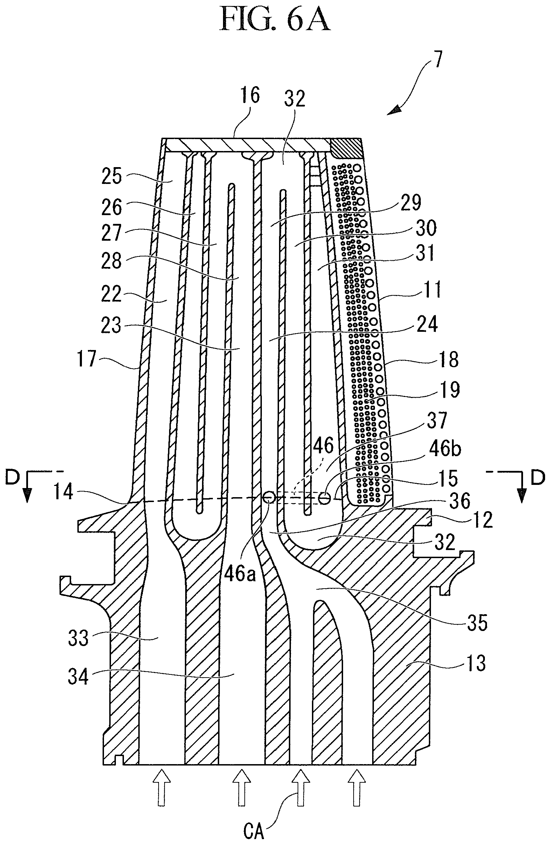

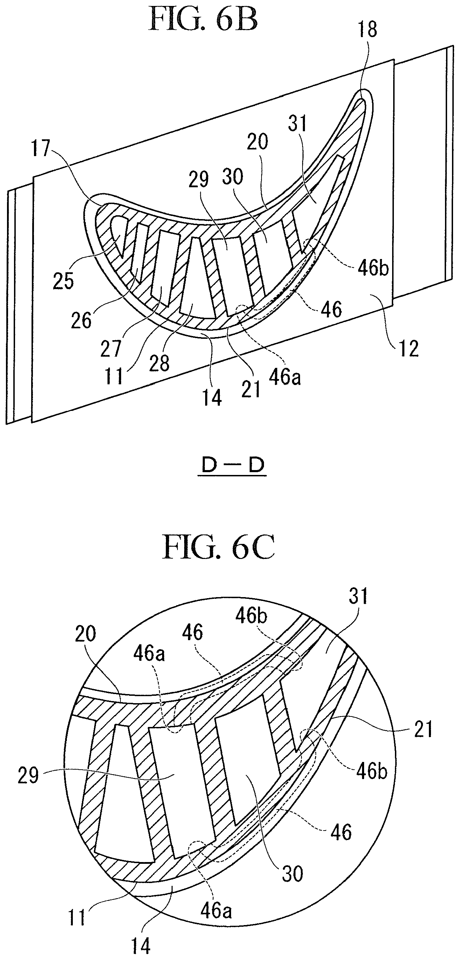

{Fig. 1} Fig. 1 illustrates an example overall configuration view of a gas turbine.
{Fig. 2} Fig. 2 illustrates a perspective view of a turbine blade.
{Fig. 3A} Fig. 3A illustrates a longitudinal sectional view of a turbine blade according to a first example.
{Fig. 3B} Fig. 3B illustrates a partial longitudinal sectional view (a cross-section A-A of Fig. 3A), which is observed from a leading edge of the turbine blade to a trailing edge thereof.
{Fig. 3C} Fig. 3C illustrates a transverse sectional view (a cross-section B-B of Fig. 3A) of the turbine blade.
{Fig. 3D} Fig. 3D illustrates a first modified example of a bypass flow channel.
{Fig. 4A} Fig. 4A illustrates a second modified example of the bypass flow channel.
{Fig. 4B} Fig. 4B illustrates a third modified example of the bypass flow channel.
{Fig. 4C} Fig. 4C illustrates a fourth modified example of the bypass flow channel.
{Fig. 5A} Fig. 5A illustrates a longitudinal sectional view of a turbine blade according to a second example.
{Fig. 5B} Fig. 5B illustrates a transverse sectional view (a cross-section C-C of Fig. 5A) of the turbine blade.
{Fig. 5C} Fig. 5C illustrates a fifth modified example of the bypass flow channel.
{Fig. 6A} Fig. 6A illustrates a longitudinal sectional view of a turbine blade according to a third example.
{Fig. 6B} Fig. 6B illustrates a transverse sectional view (a cross-section D-D of Fig. 6A) of the turbine blade.
{Fig. 6C} Fig. 6C illustrates a sixth modified example of the bypass flow channel.

### {Description of Embodiments}

Hereinafter, embodiments of a turbine blade and a gas turbine according to the present invention are described with reference to Fig. 1 to Figs. 6.

### (First Example)

With reference to Fig. 1 to Figs. 3, a first example is described below.

Fig. 1 illustrates an overall configuration view of a gas turbine. A gas turbine 1 includes: a compressor 2 that compresses combustion air; a combustor 3 that combusts the compressed air fed from the compressor 2 by jetting a fuel thereto and generates combustion gas; a turbine unit 4 that is provided on the downstream side in the flow direction of the combustion gas fed from the combustor 3 and is driven with the combustion gas fed from the combustor 3; and a rotor 5 that integrally fastens the compressor 2, the turbine unit 4, and a power generator (not illustrated).

The turbine unit 4 supplies the combustion gas generated by the combustor 3 to turbine vanes 6 and turbine blades 7, and the turbine blades 7 are rotated around the rotor 5, whereby rotational energy is converted into electric power. The turbine vanes 6 and the turbine blades 7 are alternately arranged from the upstream side to the downstream side in the flow direction of the combustion gas. In addition, the turbine blades 7 are provided in the circumferential direction of the rotor 5, and are rotated integrally with the rotor 5.

Fig. 2 illustrates an external view of the turbine blade. Each turbine blade 7 includes: a blade body 11 that extends in the radial direction and includes a meandering cooling flow channel; a platform 12 that is provided so as to be orthogonal to the blade body 11; and a base portion 13 that fixes the blade body 11 and the platform 12 to the rotor 5. The blade body 11, the platform 12, and the base portion 13 are integrally formed by molding. A fillet portion 14 forming the joint surface between the platform 12 and the blade body 11 is formed in the entire periphery of the blade body so as to have a smoothly curved surface having such a given R (radius of curvature) that can avoid stress concentration.

An example cross-sectional structure of the turbine blade is described with reference to Fig. 3A, Fig. 3B, and Fig. 3C. Fig. 3A illustrates a longitudinal sectional view of the turbine blade. Fig. 3B illustrates a partial longitudinal sectional view (a cross-section A-A of Fig. 3A), which is observed from a leading edge 17 of the blade body 11 to a trailing edge 18 thereof. Fig. 3C illustrates a transverse sectional view (a cross-section B-B of Fig. 3A) of the blade body 11. As illustrated in Fig. 3A, cooling flow channels 22, 23, and 24 in a plurality of systems are provided inside of the blade body 11 in order to cool the blade body 11 with cooling air CA. The cooling flow channels of the blade body 11 are communicated with cooling flow channels provided inside of the base portion 13, and the cooling air CA to be caused to flow into the respective cooling flow channels is supplied from cooling flow channels (not illustrated) of the rotor 5 connected to the base portion 13.

The cooling flow channels 22, 23, and 24 of the blade body 11 according to the present example are configured as flow channels in three flow systems, and are respectively communicated with three supply flow channels 33, 34, and 35 that are provided independently from one another inside of the base portion 13 connected to the platform 12.

In the cooling flow channels in three flow systems provided in the blade body 11, the first-system flow channel 22, the second-system flow channel 23, and the third-system flow channel 24 are arranged in the stated order from the leading edge 17 toward the trailing edge 18, that is, the first-system flow channel 22 is located closest to the leading edge 17. The cooling flow channels in the different flow systems are respectively communicated with the first supply flow channel 33, the second supply flow channel 34, and the third supply flow channel 35 that are cooling flow channels provided independently from one another inside of the base portion 13.

The first-system flow channel 22 is located closest to the leading edge 17, is formed of a first cooling flow channel 25 alone running from the base portion 13 side toward a blade top portion 16 in the radial direction, and extends from the base portion 13 to the blade top portion 16. In addition, a large number of film cooling holes (not illustrated) that communicate the combustion gas side with the cooling flow channel side inside of the blade body 11 are provided in portions of a negative pressure side 21 (suction side) and a positive pressure side 20 (pressure side) of the wall surfaces of the blade body 11, the portions being in contact with the first cooling flow channel 25.

The second-system flow channel 23 is provided in an intermediate part between the leading edge 17 and the trailing edge 18 inside of the blade body 11, and is formed of one meandering serpentine cooling flow channel configured by connecting flow channels, that is, a second cooling flow channel 26, a third cooling flow channel 27, and a fourth cooling flow channel 28 to one another through respective fold-back structures (return portions). In the second-system flow channel 23, the second cooling flow channel 26, the third cooling flow channel 27, and the fourth cooling flow channel 28 are arranged in the stated order from the leading edge 17 toward the trailing edge 18, that is, the second cooling flow channel 26 is located closest to the first cooling flow channel 25. The cooling air CA supplied from the rotor 5 side flows into the fourth cooling flow channel 28 through the second supply flow channel 34, and sequentially passes through the third cooling flow channel 27 and then the second cooling flow channel 26 while reversing its flow direction at the respective return portions 32.

That is, the fourth cooling flow channel 28 extends from the base portion 13 side toward the blade top portion 16 in the radial direction, is turned by 180° at corresponding one of the return portions 32 near the blade top portion 16, and is communicated with the third cooling flow channel 27. Similarly, the third cooling flow channel 27 extends from the blade top portion 16 toward the base portion 13 in the radial direction, is turned by 180° at corresponding one of the return portions 32, and is communicated with the second cooling flow channel 26. Further, the second cooling flow channel 26 extends from the base portion 13 side toward the blade top portion 16 in the radial direction, and is communicated with a cooling hole (not illustrated) provided in the blade top portion 16 in the second cooling flow channel 26. Similarly to the first cooling flow channel, a large number of film cooling holes (not illustrated) that communicate the combustion gas side with the respective cooling flow channel sides are provided in portions of the negative pressure side 21 (suction side) and the positive pressure side 20 (pressure side) of the wall surfaces of the blade body 11, the portions being in contact with the second cooling flow channel 26, the third cooling flow channel 27, and the fourth cooling flow channel 28.

The third-system flow channel 24 is provided on the trailing edge 18 side with respect to the intermediate part between the leading edge 17 and the trailing edge 18, and is formed of one meandering serpentine cooling flow channel configured by connecting a fifth cooling flow channel 29, a sixth cooling flow channel 30, and a seventh cooling flow channel 31 to one another through respective fold-back structures (return portions). In the third-system flow channel 24, the fifth cooling flow channel 29, the sixth cooling flow channel 30, and the seventh cooling flow channel 31 are arranged in the stated order from the leading edge 17 toward the trailing edge 18, that is, the fifth cooling flow channel 29 is located closest to the fourth cooling flow channel 28. The cooling air CA flowing out of the seventh cooling flow channel 31 is discharged into the combustion gas from a cooling hole (not illustrated) provided in the blade top portion 16, and part of the cooling air is discharged into the combustion gas from a trailing edge end part 19. Similarly to the second-system flow channel, the cooling air CA supplied from the rotor 5 side flows into the fifth cooling flow channel 29 through the third supply flow channel 35, and sequentially passes through the sixth cooling flow channel 30 and then the seventh cooling flow channel 31 while reversing its flow direction at the respective return portions 32.

That is, the fifth cooling flow channel 29 extends from the base portion 13 toward the blade top portion 16 in the radial direction, is turned by 180° at corresponding one of the return portions 32 near the blade top portion 16, and is communicated with the sixth cooling flow channel 30. Similarly, the sixth cooling flow channel 30 extends from the blade top portion 16 toward the base portion 13 in the radial direction, is turned by 180° at corresponding one of the return portions 32, and is communicated with the seventh cooling flow channel 31. Further, the seventh cooling flow channel 31 extends from the base portion 13 side toward the blade top portion 16 in the radial direction, and is communicated with the cooling hole (not illustrated) provided in the blade top portion 16 and the trailing edge end part 19. Similarly to the cooling flow channels in the other systems, a large number of film cooling holes (not illustrated) that communicate the combustion gas side with the respective cooling flow channel sides are provided in portions of the negative pressure side 21 (suction side) and the positive pressure side 20 (pressure side) of the wall surfaces of the blade body 11, the portions being in contact with the fifth cooling flow channel 29, the sixth cooling flow channel 30, and the seventh cooling flow channel 31.

In addition, a turbulator (not illustrated) may be provided on the inner wall of each cooling flow channel, in order to promote the convection cooling of the blade body.

With such configurations of the cooling flow channels as described above, the cooling air CA supplied from the rotor 5 side to the cooling flow channels (the first supply flow channel 33, the second supply flow channel 34, and the third supply flow channel 35), which are provided in the base portion 13 and are communicated with the respective flow systems, are supplied to the first-system flow channel 22 (the first cooling flow channel 25), the second-system flow channel 23 (the fourth cooling flow channel 28, the third cooling flow channel 27, and the second cooling flow channel 26), and the third-system flow channel 24 (the fifth cooling flow channel 29, the sixth cooling flow channel 30, and the seventh cooling flow channel 31). The cooling air CA supplied to the first-system flow channel 22 cools by convection the inner wall surfaces of the negative pressure side 21 and the positive pressure side 20 of the blade body 11 on the leading edge 17 side, and also film-cools the blade surfaces when being blown out into the combustion gas from the film cooling holes provided in the blade surfaces on the leading edge 17 side. The cooling air CA supplied to the second-system flow channel 23 cools by convection the inner wall surfaces of the negative pressure side 21 and the positive pressure side 20 in the intermediate part of the blade body 11, and also film-cools the blade surfaces when being discharged into the combustion gas from the cooling holes provided in the blade surfaces of the blade body 11. Similarly, the cooling air CA supplied to the third-system flow channel 24 cools by convection the inner wall surfaces of the negative pressure side 21 (suction side) and the positive pressure side 20 (pressure side) of the blade body 11 from the intermediate part of the blade body 11 toward the trailing edge 18, and also film-cools the blade surfaces when being discharged into the combustion gas from the cooling holes provided in the blade surfaces. Further, part of the cooling air CA flowing through the seventh cooling flow channel 31 cools by convection the trailing edge end part 19 when being discharged into the combustion gas from the trailing edge end part 19.

Next, a cooling structure for the fillet portion is described. Fig. 3A, Fig. 3B, and Fig. 3C each illustrate a bypass flow channel 41 that connects the first cooling flow channel 25 to the second cooling flow channel 26. The bypass flow channel 41 is formed inside of the wall of the blade body 11, and the bypass flow channel 41 has: an entrance 41a communicated with the first cooling flow channel 25; and an exit 41b communicated with the second cooling flow channel 26. That is, in the longitudinal sectional view of the blade body 11 illustrated in Fig. 3A, the bypass flow channel 41 is provided such that both the entrance 41a and the exit 41b of the bypass flow channel 41 are located within a formation range of the fillet portion 14.

The range of the fillet portion is described below. As illustrated in the partial sectional view of Fig. 3B, the fillet portion 14 is defined as a region surrounded by the curved surface R, the blade body 11, and the platform 12, the curved surface R having such a given radius of curvature that can reduce a thermal stress on the joint part between the blade body 11 and the platform 12, and the fillet portion 14 is formed in the entire periphery of the blade body. Specifically, in the partial sectional view of Fig. 3B, a point is assumed as X at which an outer wall surface 11a of the blade body 11, which linearly extends in the radial direction, smoothly intersects with the curved surface R forming the outer surface of the fillet portion 14, and a point is assumed as Y at which a linearly spreading platform outer surface 12a of the platform 12 smoothly intersects with the curved surface R. Then, the point X and the point Y are continuously drawn around the blade body 11, whereby a fillet upper end line 14a and a fillet lower end line 14b are respectively defined along the boundaries between the fillet portion 14 and the outer wall surface 11a of the blade body and between the fillet portion 14 and the platform outer surface 12a.

A region (a hatched portion in Fig. 3B) surrounded by the fillet upper end line 14a and the fillet lower end line 14b defines the range of the fillet portion 14.

As illustrated in the partial sectional view of Fig. 3B, the bypass flow channel 41 is provided in the fillet portion 14 surrounded by the fillet upper end line 14a and the fillet lower end line 14b in sectional view taken from the leading edge to the trailing edge of the blade. That is, the entrance 41a of the bypass flow channel 41 is formed in the inner wall surface of the first cooling flow channel 25 within the fillet portion 14, in sectional view taken from the leading edge to the trailing edge of the blade. The bypass flow channel 41 extends from the entrance 41a toward the curved surface R in a substantially horizontal direction (rotor axis direction). As illustrated in Fig. 3A and Fig. 3C, the bypass flow channel 41 is provided along the fillet portion 14 inside of the curved surface R of the fillet portion 14 (on the serpentine flow channel side), and is connected to the exit 41b on the second cooling flow channel side. Note that, in the present example, the entirety of the bypass flow channel 41 is provided within the fillet portion 14 surrounded by the fillet upper end line 14a and the fillet lower end line 14b. Note that the bypass flow channel 41 can be formed together in the course of monoblock casting of the turbine blade.

Next, technical significance of the bypass flow channel is described.

In general, a serpentine flow channel includes a long-distance flow channel that is elongated and meandering, and includes fold-back structures (return portions), a turbulator, and other such internal structures in the middle of the flow channel, and hence the pressure of the cooling air decreases due to pressure loss while the cooling air flows through the flow channel. Note that the pressures of the cooling air CA

inside of the first supply flow channel 33, the second supply flow channel 34, and the third supply flow channel 35 that are provided inside of the base portion 13 and take in the cooling air CA from the rotor 5 side are substantially the same as one another.

As illustrated in Fig. 3A and Fig. 3C, the cooling flow channel (the first cooling flow channel 25) of the first-system flow channel 22 is configured as a single flow channel that is located closest to the leading edge 17 and extends from the base portion 13 side to the blade top portion 16. The pressure of the cooling air CA is highest in a portion on the base portion 13 side of the first cooling flow channel 25, the portion taking in the cooling air CA from the rotor 5 side. A high-pressure part 36 is formed in a region inside of the flow channel near the fillet portion 14, the region including both portions on the inner side and the outer side in the radial direction with respect to the fillet portion 14.

Further, the second-system flow channel 23 is formed of a long meandering serpentine cooling flow channel configured by connecting the second cooling flow channel 26, the third cooling flow channel 27, and the fourth cooling flow channel 28 to one another through the fold-back structures (return portions). The pressure of the cooling air CA is highest on the upstream side of the fourth cooling flow channel 28 that takes in the cooling air CA from the rotor 5 side. The cooling air pressure gradually decreases due to pressure loss while the cooling air flows through the cooling flow channels and the return portions, and the cooling air pressure becomes substantially the same as the combustion gas pressure immediately after the cooling air is discharged from the cooling hole (not illustrated) of the blade body in the second cooling flow channel 26. That is, the cooling air pressure decreases while the cooling air CA flows through the fourth cooling flow channel 28, the third cooling flow channel 27, and the second cooling flow channel 26 in the stated order, and hence the cooling air pressure is lowest at the downstream end (at the blade top portion 16) of the second cooling flow channel 26. In an area leading to the blade body 11 from the base portion 13 side of the fourth cooling flow channel 28, a high-pressure part 36 is formed in a region near the fillet portion 14, the region including both portions on the inner side and the outer side in the radial direction with respect to the fillet portion 14. A low-pressure part 37 is formed in a region near the fillet portion 14 in the second cooling flow channel 26.

With this configuration, part of the cooling air can be branched to flow into the bypass flow channel 41 by utilizing a difference in pressure of the cooling air between the high-pressure part 36 on the entrance 41a side of the bypass flow channel and the low-pressure part 37 on the exit 41b side thereof, and the fillet portion 14 can be cooled by convection with the cooling air CA flowing through the bypass flow channel, from the inside of the blade body 11.

In addition, the bypass flow channel may be provided in one of the negative pressure side 21 (suction side) and the positive pressure side 20 (pressure side) of the blade body 11, or may be provided in both the sides. It is desirable to select one side or both the sides, depending on the blade structure and how a thermal load is put on the blade surfaces. In the first example illustrated in Fig. 3C, the bypass flow channel 41 is provided only in the positive pressure side 20 of the blade body 11 on the leading edge 17 side, but the bypass flow channel 41 may be provided only in the negative pressure side 21, depending on the state of a thermal stress. Further, in a first modified example illustrated in Fig. 3D, the bypass flow channel 41 is provided in both the positive pressure side 20 and the negative pressure side 21.

According to the configuration described in the first example, the bypass flow channel is provided near the fillet portion, and hence the fillet portion can be cooled by convection from the inside thereof. This eliminates the need to perform hole processing, such as forming a cooling hole, on the blade surface near the fillet portion or the platform surface to which a high thermal stress is applied, and hence the possibility of the fatigue crack and other such problems of the blade can be avoided, leading to enhanced reliability of the blade.

Further, the cooling air is returned to the serpentine flow channel without being discharged into the combustion gas from the cooling hole near the fillet portion, and hence the cooling air returned to the second cooling flow channel 26 further cools the blade body 11 by convection while flowing through the second cooling flow channel 26. Furthermore, the cooling air is blown out from the film cooling holes to film-cool the blade surfaces, and hence the cooling air can be used for several occasions, leading to a reduction in the amount of cooling air. Accordingly, the thermal efficiency of the entire gas turbine and the reliability of the gas turbine can be enhanced.

Fig. 4A, Fig. 4B, and Fig. 4C each illustrate a modified example of the first example concerning the bypass flow channel. In a second modified example illustrated in Fig. 4A, the high-pressure part 36 is provided on the inner side in the radial direction from the fillet portion 14 inside of the first cooling flow channel 25, and the low-pressure part 37 is provided on the outer side in the radial direction from the fillet portion 14 inside of the second cooling flow channel 26. Then, an entrance 42a of a bypass flow channel 42 is provided at the high-pressure part 36, and an exit 42b thereof is provided at the low-pressure part 37. The bypass flow channel 42 connects the entrance 42a thereof substantially linearly to the exit 42b thereof in longitudinal sectional view, and an intermediate part of the bypass flow channel 42 is provided along the inside of the fillet portion 14 (on the serpentine flow channel side).

In a third modified example illustrated in Fig. 4B, the high-pressure part 36 is provided on the outer side in the radial direction from the fillet portion 14 inside of the first cooling flow channel 25, and the low-pressure part 37 is provided on the inner side in the radial direction from the fillet portion 14 inside of the second cooling flow channel 26. Then, an entrance 43a of a bypass flow channel 43 is provided at the high-pressure part 36, and an exit 43b thereof is provided at the low-pressure part 37. Furhter, similarly to the second modified example, the bypass flow channel 43 connects the entrance 43a thereof substantially linearly to the exit 43b thereof in longitudinal sectional view, and an intermediate part of the bypass flow channel 43 is provided along the inside of the fillet portion 14.

A fourth modified example illustrated in Fig. 4C is the same as the first example in the definition of the high-pressure part 36, but is different from the first example in that the low-pressure part 37 is provided near the fillet portion 14 inside of the third cooling flow channel 27. If the low-pressure part 37 is provided near the fillet portion 14 inside of the third cooling flow channel 27, the cooling air can be caused to flow into a bypass flow channel 44 by utilizing a difference in pressure between a portion near the fillet portion 14 inside of the fourth cooling flow channel 28 and a portion near the fillet portion 14 inside of the third cooling flow channel 27. In addition, an exit 44b of the bypass flow channel 44 is provided in the fillet portion 14 on the downstream side of the third cooling flow channel 27, and an intermediate part of the bypass flow channel 44 is provided along the inside of the fillet portion 14, whereby the bypass flow channel length can be made longer than that of the first modified example, leading to a further increase in the cooling length of the fillet portion 14.

### (Second Example)

Next, with reference to Fig. 5A, Fig. 5B, and Fig. 5C, a second example is described below. The present example is different from the first example in that the present example relates to a bypass flow channel 45 within the second-system flow channel 23, whereas the first example relates to the bypass flow channel between different systems, that is, the first-system flow channel 22 and the second-system flow channel 23. That is, in the present example, the high-pressure part 36 is provided in the fillet portion 14 on the upstream side of the fourth cooling flow channel 28, and the low-pressure part 37 is provided in the fillet portion 14 on the upstream side of the second cooling flow channel 26. The configuration of the present example can produce an effect similar to that of the first example.

Note that, similarly to the first example, the bypass flow channel 45 of the present example may be provided in one of the negative pressure side 21 (suction side) and the positive pressure side 20 (pressure side) of the blade body 11, or may be provided in both the sides. It is desirable to select one side or both the sides, depending on the blade structure and how a thermal load is put on the blade surfaces. In an example illustrated in Fig. 5B, the bypass flow channel 45 is provided only in the positive pressure side 20 of the blade body 11, but the bypass flow channel 45 may be provided only in the negative pressure side 21, depending on the state of a thermal stress. In an example illustrated in Fig. 5C, the bypass flow channel 45 is provided in both the positive pressure side 20 and the negative pressure side 21. In addition, the same concept of the fillet portion 14 and the same relation between the fillet portion and the bypass flow channel as those of the first example can be applied to the present example. Further, the concepts of the modified examples concerning the bypass flow channels illustrated in Fig. 4A and Fig. 4B can be applied to the present example.

### (Third Example)

Next, with reference to Fig. 6A, Fig. 6B, and Fig. 6C, a third example is described below. The present example is different from the first example and the second example in that the present example relates to a bypass flow channel 46 within the third-system flow channel 24. That is, the third-system flow channel 24 is formed of a long meandering serpentine cooling flow channel configured by connecting the fifth cooling flow channel 29, the sixth cooling flow channel 30, and the seventh cooling flow channel 31 in the stated order from the leading edge 17 to the trailing edge 18 through the fold-back structures (return portions), the fifth cooling flow channel 29 being located closest to the fourth cooling flow channel 28. The pressure of the cooling air CA is highest at the entrance of the fifth cooling flow channel 29, the entrance taking in the cooling air from the rotor 5 side. Similarly to the second-system flow channel, the cooling air pressure gradually decreases due to pressure loss while the cooling air CA flows through the cooling flow channel, and the cooling air pressure becomes substantially the same as the combustion gas pressure immediately after the cooling air, which has flown from the seventh cooling flow channel 31 toward the trailing edge 18, is discharged from the trailing edge end part 19 into the combustion gas. That is, the cooling air pressure gradually decreases while the cooling air CA flows through the fifth cooling flow channel 29, the sixth cooling flow channel 30, and the seventh cooling flow channel 31 in the stated order. A high-pressure part 36 having a high pressure is formed near the fillet portion 14 inside of the flow channel for the cooling air CA entering the blade body 11 from the base portion 13 side of the fifth cooling flow channel 29, and a low-pressure part 37 having a low pressure is formed near the fillet portion 14 on the upstream side of the seventh cooling flow channel 31. Accordingly, a difference in pressure between the fifth cooling flow channel 29 and the seventh cooling flow channel 31 may be utilized, and the bypass flow channel 46 may be provided therebetween so as to run along the fillet portion 14. The configuration of the present example can produce an effect similar to that of the first example.

Note that, also in the present example, whether the bypass flow channel 46 is provided in any of the negative pressure side 21 and the positive pressure side 20 of the blade body 11 or in both the sides is selected depending on the blade structure and how a thermal load is put on the blade surfaces, similarly to the first example. In an example illustrated in Fig. 6B, the bypass flow channel 46 is provided only in the negative pressure side 21 of the blade body 11, but the bypass flow channel 46 may be provided only in the positive pressure side 20, depending on the state of a thermal stress. In an example illustrated in Fig. 6C, the bypass flow channel 46 is provided in both the positive pressure side and the negative pressure side. Further, the same concept of the fillet portion 14 and the same relation between the fillet portion and the bypass flow channel as those of the first example can be applied to the present example. Furthermore, similarly to the second example, the concepts of the modified examples concerning the bypass flow channels illustrated in Fig. 4A and Fig. 4B can be applied to the present example.

Note that the configurations described above in the first example to the third example may be independently adopted for each example or may be adopted in combination, depending on the blade structure and how a thermal load is put on the blade surfaces. Further, an effect similar to that of the first example can be obtained by adopting some of the above-mentioned examples in combination.

In addition, according to the first example, the serpentine flow channels in three flow systems are provided, the first-system flow channel 22 located closest to the leading edge 17 is configured as a single cooling flow channel, and the second-system flow channel 23 and the third-system flow channel 24 are each configured as a serpentine cooling flow channel formed by connecting in series three cooling flow channels to one another from the leading edge 17 toward the trailing edge 18. A similar concept can be applied to configurations of other cooling flow channels.

In the cooling flow channel according to the first example, the first-system flow channel is configured as a single flow channel, and the second-system flow channel and the third-system flow channel are each configured as three serpentine cooling flow channels. That is, the cooling flow channel according to the first example is configured using seven cooling flow channels as a whole (this configuration is referred to as 1-3U-3D system). Here, the "1-3U-3D system" means that flow channels in three flow systems are provided and that the second-system flow channel and the third flow channel are each configured using three flow channels. Further, the flow channel through which the cooling air CA flows from the leading edge 17 toward the trailing edge 18 is represented by "D", and the flow channel through which the cooling air CA flows in the opposite direction is represented by "U", whereby the two flow channels are distinguished from each other.

Another flow channel configuration (1-5D-1 system) is described as an example. This system is configured using seven flow channels as a whole, similarly to the first example. The first-system flow channel is configured as a single flow channel, the second-system flow channel is configured as a serpentine flow channel including five flow channels, and the third-system flow channel is configured as a single cooling flow channel. In the second-system flow channel, the cooling air flows from the leading edge 17 toward the trailing edge 18. In such a system, assuming that a flow channel number is given to each flow channel in order from the leading edge 17 to the trailing edge 18 similarly to the first example, the following configuration is established. That is, a bypass flow channel is provided between the first cooling flow channel and the third cooling flow channel, between the first cooling flow channel and the fourth cooling flow channel, or between the first cooling flow channel and the fifth cooling flow channel, and the bypass flow channel is provided along the inside of the fillet portion 14.

There are a wide variety of configurations for the cooling flow channel in the turbine blade, depending on the concept of cooling design of the blade, but a configuration that can satisfy the technical idea of the present invention can be achieved in the following manner. That is, a flow channel having the highest pressure among cooling flow channels in a given system is defined as the high-pressure part, and a flow channel having the lowest pressure among the flow channels in the given system or flow channels in a different system is defined as the low-pressure part. Then, a bypass flow channel is provided between the high-pressure part and the low-pressure part near the fillet portion. It is not advisable to define the high-pressure part and the low-pressure part at positions far from the fillet portion, because such definition causes difficulty in providing the bypass flow channel therebetween upon actual manufacturing. Note that description is given above by taking as an example the high-pressure part having the highest pressure and the low-pressure part having the lowest pressure, but the bypass flow channel can be provided even at a part having an intermediate pressure as long as a difference in pressure that is large enough to allow the cooling air to flow between the high-pressure part and the low-pressure part can be ensured.

### {Reference Signs List}

- 1: gas turbine
- 2: compressor
- 3: combustor
- 4: turbine unit
- 5: rotor
- 6: turbine vane
- 7: turbine blade
- 11: blade body
- 11a: outer wall surface of blade body
- 12: platform
- 12a: platform outer surface
- 13: base portion
- 14: fillet portion
- 14a: fillet upper end line
- 14b: fillet lower end line
- 16: blade top portion
- 17: leading edge
- 18: trailing edge
- 19: trailing edge end part
- 20: positive pressure side (pressure side)
- 21: negative pressure side (suction side)
- 22: first-system flow channel
- 23: second-system flow channel
- 24: third-system flow channel
- 25: first cooling flow channel
- 26: second cooling flow channel
- 27: third cooling flow channel
- 28: fourth cooling flow channel
- 29: fifth cooling flow channel
- 30: sixth cooling flow channel
- 31: seventh cooling flow channel
- 32: return portion
- 33: first supply flow channel
- 34: second supply flow channel
- 35: third supply flow channel
- 36: high-pressure part
- 37: low-pressure part
- 41, 42, 43, 44, 45, 46: bypass flow channel
- 41a, 42a, 43a, 44a, 45a, 46a: entrance
- 41b, 42b, 43b, 44b, 45b, 46b: exit
- CA: cooling air

## Claims

1. A turbine blade (7) comprising:
a platform (12);
a blade body (11) including a cooling flow channel (25-31,41-46) including a meandering serpentine cooling flow channel;
a fillet portion (14) defined as a region surrounded by the blade body (11), the platform (12), and a curved surface which is formed in a joint surface between the blade body (11) and the platform (12); and
a base portion (13) including a cooling flow channel (33-35) communicated with the cooling flow channel (25-31,41-46) of the blade body (11),
wherein the cooling flow channel (25-31,33-35,41-46) includes a bypass flow channel (41;42;43;44;45;46) that is branched off from a high-pressure part (36) of the cooling flow channel (25-31,33-35,41-46), is provided inside of the fillet portion (14) so as to run along the fillet portion (14), and is connected to a low-pressure part (37) of the cooling flow channel (25-31,33-35,41-46).

2. The turbine blade (7) according to claim 1, wherein
the bypass flow channel (41;42;43;44;45;46) has an entrance (41a;42a;43a;44a;45a;46a) provided in a portion of the fillet portion (14) corresponding to the high-pressure part (36) and an exit (41b;42b;43b;44b;45b;46b) provided in a portion of the fillet portion (14) corresponding to the low-pressure part (37).

3. The turbine blade (7) according to claim 1, wherein
the bypass flow channel (42) has an entrance (42a) provided on an inner side in a radial direction from a portion of the fillet portion (14) corresponding to the high-pressure part (36) and an exit (42b) provided on an outer side in the radial direction from a portion of the fillet portion (14) corresponding to the low-pressure part (37).

4. The turbine blade (7) according to claim 1, wherein
the bypass flow channel (43) has an entrance (43a) provided on an outer side in a radial direction from a portion of the fillet portion (14) corresponding to the high-pressure part (36) and an exit (43b) provided on an inner side in the radial direction from a portion of the fillet portion (14) corresponding to the low-pressure part (37).

5. The turbine blade (7) according to any one of claim 1 to claim 4, wherein
the cooling flow channel includes cooling flow channels (25-31) in a plurality of systems (22,23,24), and
the high-pressure part (36) and the low-pressure part (37) are provided in cooling flow channels (25-31) in different systems (22,23,24).

6. The turbine blade (7) according to any one of claim 1 to claim 4, wherein
the cooling flow channel includes cooling flow channels (25-31) in a plurality of systems (22,23,24), and
the high-pressure part (36) and the low-pressure part (37) are provided in a cooling flow channel (26-31) in the same system (23,24).

7. The turbine blade (7) according to any one of claim 1 to claim 6, wherein
the bypass flow channel includes the bypass flow channel (41-46) which is provided in at least one of a pressure side (20) and a suction side (21) of the blade body (11).

8. The turbine blade (7) according to any one of claim 1 to claim 7, wherein
the cooling flow channel of the blade body (11) includes cooling flow channels in three systems (22,23,24),
the first-system cooling flow channel (22) is formed of a first cooling flow channel (25) located closest to a leading edge (17),
the second-system cooling flow channel (23) is formed of a serpentine cooling flow channel including a second cooling flow channel (26), a third cooling flow channel (27), and a fourth cooling flow channel (28) that are arranged in the stated order from the leading edge (17) toward a trailing edge (18), the second cooling flow channel (26) being located close to the first cooling flow channel (25),
the third-system cooling flow channel (24) is formed of a serpentine cooling flow channel including a fifth cooling flow channel (29), a sixth cooling flow channel (30), and a seventh cooling flow channel (31) that are arranged in the stated order from the leading edge (17) toward the trailing edge (18), the fifth cooling flow channel (29) being located close to the fourth cooling flow channel (28),
the high-pressure part (36) is provided in the first cooling flow channel (25), and
the low-pressure part (37) is provided in the second cooling flow channel (26).

9. A gas turbine (1) comprising the turbine blade (7) according to any one of claim 1 to claim 8.

## Patentansprüche

1. Eine Turbinenschaufel (7) mit:
einer Plattform (12),
einem Schaufelkörper (11) mit einem Kühlungsströmungskanal (25-31,41-46) mit einem meandernden Serpentinen-Kühlungsströmungskanal,
einem Kehlabschnitt (14), der als ein Bereich definiert ist, der von dem Schaufelkörper (11), der Plattform (12) und einer gekrümmten Oberfläche umgeben ist, die in einer Verbindungsoberfläche zwischen dem Schaufelkörper (11) und der Plattform (12) ausgebildet ist, und
einem Basisabschnitt (13) mit einem Kühlungsströmungskanal (33-35), der mit dem Kühlungsströmungskanal (25-31,41-46) des Schaufelkörpers (11) kommuniziert,
wobei der Kühlungsströmungskanal (25-31,33-35,41-46) einen Bypass-Strömungskanal (41;42;43;44;45;46) aufweist, der von einem Hochdruckteil (36) des Kühlungsströmungskanals (25-31,33-35,41-46) abzweigt, der im Inneren des Kehlabschnitts (14) so vorgesehen ist, dass er entlang dem Kehlabschnitt (14) verläuft, und der mit einem Niederdruckteil (37) des Kühlungsströmungskanals (25-31,33-35,41-46) verbunden ist.

2. Die Turbinenschaufel (7) gemäß Anspruch 1, wobei
der Bypass-Strömungskanal (41;42;43;44;45;46) einen Eingang (41a;42a;43a;44a;45a;46a), der in einem Abschnitt des Kehlabschnitts (14) entsprechend dem Hochdruckteil (36) vorgesehen ist, und einen Ausgang (41b;42b;43b;44b;45b;46b), der in einem Abschnitt des Kehlabschnitts (14) entsprechend dem Niederdruckteil (37) vorgesehen ist, besitzt.

3. Die Turbinenschaufel (7) gemäß Anspruch 1, wobei
der Bypass-Strömungskanal (42) einen Eingang (42a), der an einer inneren Seite in einer Radialrichtung von einem Abschnitt des Kehlabschnitts (14) entsprechend dem Hochdruckteil (36) vorgesehen ist, und einen Ausgang (42b), der an einer äußeren Seite in der Radialrichtung von einem Abschnitt des Kehlabschnitts (14) entsprechend dem Niederdruckteil (37) vorgesehen ist, besitzt.

4. Die Turbinenschaufel (7) gemäß Anspruch 1, wobei
der Bypass-Strömungskanal (43) einen Eingang (43a), der an einer äußeren Seite in einer Radialrichtung von einem Abschnitt des Kehlabschnitts (14) entsprechend dem Hochdruckteil (36) vorgesehen ist, und einen Ausgang (43b), der an einer inneren Seite in der Radialrichtung von einem Abschnitt des Kehlabschnitts (14) entsprechend dem Hochdruckteil (37) vorgesehen ist, besitzt.

5. Die Turbinenschaufel (7) gemäß einem der Ansprüche 1 bis 4, wobei
der Kühlungsströmungskanal Kühlungsströmungskanäle (25-31) in einer Vielzahl von Systemen (22,23,24) aufweist, und
der Hochdruckteil (36) und der Niederdruckteil (37) in Kühlungsströmungskanälen (25-31) in unterschiedlichen Systemen (22,23,24) vorgesehen sind.

6. Die Turbinenschaufel (7) gemäß einem der Ansprüche 1 bis 4, wobei
der Kühlungsströmungskanal Kühlungströmungskanäle (25-31) in einer Vielzahl von Systemen (22,23,24) aufweist, und
der Hochdruckteil (36) und der Niederdruckteil (37) in einem Kühlungsströmungskanal (26-31) in dem selben System (23,24) vorgesehen sind.

7. Die Turbinenschaufel (7) gemäß einem der Ansprüche 1 bis 6, wobei
der Bypass-Strömungskanal den Bypass-Strömungskanal (41-46) aufweist, der in zumindest einem von einer Druckseite (20) und einer Saugseite (21) des Schaufelkörpers (11) vorgesehen ist.

8. Die Turbinenschaufel (7) gemäß einem der Ansprüche 1 bis 7, wobei
der Kühlungsströmungskanal des Schaufelkörpers (11) Kühlungsströmungskanäle in drei Systemen (22,23,24) aufweist,
der Kühlungsströmungskanals des ersten Systems (22) aus einem ersten Kühlungsströmungskanal (25) gebildet ist, der sich am nächsten bei einer Vorderkante (17) befindet,
der Kühlungsströmungskanal des zweiten Systems (23) aus einem Serpentinen-Kühlungsströmungskanal gebildet ist, der einen zweiten Kühlungsströmungskanal (26), einen dritten Kühlungsströmungskanal (27) und einen vierten Kühlungsströmungskanal (28), die in der angegebenen Reihenfolge von der Vorderkante (17) zu einer Hinterkante (18) angeordnet sind, umfasst, wobei sich der zweite Kühlungsströmungskanal (26) nahe bei dem ersten Kühlungsströmungskanal (25) befindet,
der Kühlungsströmungskanal des dritten Systems (24) aus einem Serpentinen-Kühlungsströmungskanal gebildet ist, der einen fünften Kühlungsströmungskanal (25), einen sechsten Kühlungsströmungskanal (30) und einen siebten Kühlungsströmungskanal (31), die in der angegebenen Reihenfolge von der Vorderkante (17) zu der Hinterkante (18) angeordnet sind, umfasst, wobei der fünfte Kühlungsströmungskanal (29) sich nahe bei dem vierten Kühlungsströmungskanal (28) befindet,
der Hochdruckteil (36) in dem ersten Kühlungsströmungskanal (25) vorgesehen ist, und
der Niederdruckteil (37) in dem zweiten Kühlungsströmungskanal (26) vorgesehen ist.

9. Eine Gasturbine (1) mit der Turbinenschaufel (7) gemäß einem der Ansprüche 1 bis 8.

## Revendications

1. Aube (7) de turbine comprenant :
une plateforme (12);
un corps (11) d'aube incluant un canal (25 à 31, 41 à 46) pour un courant de refroidissement incluant un canal pour un courant de refroidissement serpentant sinueusement;
une partie (14) de raccord définie comme étant une région entourée du corps (11) de l'aube, de la plateforme (12) et d'une surface courbe qui est formée dans une surface de jonction entre le corps (11) de l'aube et la plateforme (12); et
une partie (13) de base incluant un canal (33 à 35) pour un courant de refroidissement communiquant avec le canal (25 à 31, 41 à 46) pour un courant de refroidissement du corps (11) de l'aube,
dans laquelle le canal (25 à 31, 33 à 35, 41 à 46) pour un courant de refroidissement inclut un canal (41; 42; 43; 44; 45; 46) pour un courant de dérivation, qui bifurque d'une partie (36) de haute pression du canal (25 à 31, 33 à 35, 41 à 46) pour un courant de refroidissement, est prévu à l'intérieur de la partie (14) de raccord, de manière à courir le long de la partie (14) de raccord, et communique avec une partie (37) de basse pression du canal (25 à 31, 33 à 35, 41 à 46) pour un courant de refroidissement.

2. Aube (7) de turbine suivant la revendication 1, dans laquelle le canal (41; 42; 43; 44; 45; 46) pour un courant de dérivation a une entrée (41a; 42a; 43a; 44a; 45a; 46a) prévue dans une partie de la partie (14) de raccord correspond à la partie (36) de haute pression et une sortie (41b; 42b; 43b; 44b; 45b; 46b) prévue dans une partie de la partie (14) vers un corps correspondant à la partie (37) de basse pression.

3. Aube (7) de turbine suivant la revendication 1, dans laquelle le canal (42) de courant de dérivation a une entrée (42a) prévue d'un côté intérieur dans une direction radiale à partir d'une partie de la partie (14) de raccord correspondant à la partie (36) de haute pression et une sortie (42b) prévue d'un côté extérieur dans la direction radiale à partir d'une partie de la partie (14) de raccord correspondant à la partie (37) de basse pression.

4. Aube (7) de turbine suivant la revendication 1, dans laquelle
le canal (43) de courant de dérivation a une entrée (43a) prévue d'un côté extérieur dans une direction radiale à partir d'une partie de la partie (14) de raccord correspondant à la partie (36) de haute pression et une sortie (43b) prévue d'un côté intérieur dans la direction radiale à partir d'une partie de la partie (14) de raccord correspondant à la partie (37) de basse pression.

5. Aube (7) de turbine suivant l'une quelconque des revendications 1 à 4, dans laquelle
le canal de courant de refroidissement comprend des canaux (25 à 31) de courant de refroidissement en une pluralité de systèmes (22, 23, 24), et
la partie (36) de haute pression et la partie (37) de basse pression sont prévues pour des canaux (25 à 31) pour un courant de refroidissement dans des systèmes (22, 23, 24) différents.

6. Aube (7) de turbine suivant l'une quelconque des revendications 1 à 4, dans laquelle
le canal pour un courant de refroidissement inclut des canaux (25 à 31) pour un courant de refroidissement en une pluralité de systèmes (22, 23, 24), et
la partie (36) de haute pression et la partie (37) de basse pression sont prévues dans un canal (26 à 31) pour un courant de refroidissement dans le même système (23, 24).

7. Aube (7) de turbine suivant l'une quelconque des revendications 1 à 6, dans laquelle
le canal pour un courant de dérivation inclut le canal (41 à 46) pour un courant de dérivation, qui est prévu dans au moins l'un d'un intrados (20) et d'un extrados (21) du corps (11) de l'aube.

8. Aube (7) de turbine suivant l'une quelconque des revendications 1 à 7, dans laquelle
le canal pour un courant de refroidissement du corps (11) de l'aube inclut des canaux pour un courant de refroidissement dans trois systèmes (22, 23, 24),
le premier canal (22) pour un courant de refroidissement du premier système est formé d'un premier canal (25) pour un courant de refroidissement placé le plus près d'un bord (17) d'attaque,
le deuxième canal (23) pour un courant de refroidissement du deuxième système est formé d'un canal pour un courant de refroidissement qui serpente, incluant un deuxième canal (26) pour un courant de refroidissement, un troisième canal (27) pour un courant de refroidissement et un quatrième canal (28) pour un courant de refroidissement, qui sont disposés dans l'ordre indiqué du bord (17) d'attaque au bord (18) de fuite, le deuxième conduit (26) pour un courant de refroidissement étant placé près du premier conduit (25) pour un conduit de refroidissement,
le canal (24) pour un courant de refroidissement du troisième système est formé d'un canal pour un courant de refroidissement qui serpente, incluant un cinquième canal (29) pour un courant de refroidissement, un sixième canal (30) pour un courant de refroidissement et un septième canal (31) pour un courant de refroidissement, qui sont disposés dans l'ordre indiqué du bord (17) d'attaque au bord (18) de fuite, le cinquième conduit (29) pour un courant de refroidissement étant placé près du quatrième conduit (28) pour un courant de refroidissement,
la partie (36) de haute pression est prévue dans le premier canal (25) pour un courant de refroidissement, et
la partie (37) de basse pression est prévue dans le deuxième canal (26) pour un courant de refroidissement.

9. Turbine (1) à gaz comprenant l'aube (7) de turbine suivant l'une quelconque des revendications 1 à 8.
